# EUROPÄISCHE PATENTSCHRIFT

(11) **EP 2 547 422 B1**
(45) Veröffentlichungstag und Bekanntmachung des Hinweises auf die Patenterteilung: **20.08.2014**
(21) Anmeldenummer: 11710155.0
(22) Anmeldetag: 15.03.2011
(51) Int. Cl.: B01D 53/04, B01D 53/26, B60T 17/00

(54) **LUFTTROCKNER, INSBESONDERE FÜR EINE DRUCKLUFTANLAGE IN EINEM NUTZFAHRZEUG**
AIR DRYER, SPECIALLY FOR THE COMPRESSED AIR SYSTEM OF A LOAD VEHICLE
SÉCHEUR D'AIR, SPÉCIALEMENT POUR LE SYSTÈME D'AIR COMPRIMÉ D'UN CAMION

(30) Priorität: 18.03.2010 DE 102010011956
(43) Veröffentlichungstag der Anmeldung: 23.01.2013
(73) Patentinhaber: Mann + Hummel GmbH, 71638 Ludwigsburg (DE)
(72) Erfinder: BUCHNER, Bernd-Oliver, 84160 Frontenhausen (DE); NIEMEYER, Stephan, 71711 Steinheim (DE)
(86) Internationale Anmeldenummer: PCT/EP2011/053856
(87) Internationale Veröffentlichungsnummer: WO 2011/113815

(56) Entgegenhaltungen:
- EP-A1- 2 020 259
- EP-A2- 2 140 924
- WO-A2-2004/103509

## Beschreibung

### Technisches Gebiet

Die Erfindung bezieht sich auf einen Lufttrockner, insbesondere für eine Druckluftanlage in einem Nutzfahrzeug, nach dem Oberbegriff des Anspruches 1. Ein solcher Lufttrockner ist aus EP 2140924 A bekannt.

### Stand der Technik

In der DE 10 2007 034 435 A1 wird ein Lufttrockner mit einem zylindrischen Außengehäuse beschrieben, in dem ein Filterelement und ein Trockenmittelbehälter aufgenommen sind. Derartige Lufttrockner werden üblicherweise in Druckluftanlagen in Nutzfahrzeugen zum Entfeuchten der Luft eingesetzt. Das Filterelement ist ringförmig ausgebildet und umschließt den Trockenmittelbehälter, in welchem ein Trockenmittel aufgenommen ist. Die in den Lufttrockner eingeführte Luft durchströmt zunächst radial das Filterelement und anschließend axial das Trockenmittel im Trockenmittelbehälter. Das Filterelement liegt hierbei mit einer an seiner Stirnseite angeordneten Endscheibe axial an einem Absatz des Trockenmittelbehälters an. Eine weitere Endscheibe befindet sich an der gegenüberliegenden Stirnseite des Filterelementes, die an einer Ringscheibe mit einer Dichtlippe zur Abstützung an einem Gehäusebauteil anliegt.

Der Erfindung liegt die Aufgabe zugrunde, einen Lufttrockner mit vereinfachtem Aufbau anzugeben.

### Offenbarung der Erfindung

Diese Aufgabe wird erfindungsgemäß mit den Merkmalen des Anspruches 1 gelöst. Die Unteransprüche geben zweckmäßige Weiterbildungen an.

Der erfindungsgemäße Lufttrockner wird vorzugsweise in Kraftfahrzeugen, insbesondere in Nutzfahrzeugen eingesetzt und liefert getrocknete Luft für eine Druckluftanlage, über die luftbetriebene Aggregate mit Druckluft versorgt werden, beispielsweise eine Bremsanlage oder eine Einrichtung zum Öffnen und Schließen von Türen in Omnibussen. Um sicherzustellen, dass die Druckluft einen maximal zulässigen Feuchtegehalt nicht überschreitet, wird der Luft über den Lufttrockner Feuchtigkeit entzogen.

Der Lufttrockner weist ein Gehäuse auf, in welchem zum einen ein Trockenmittelbehälter aufgenommen ist und zum andern ein Filterelement, welches ringförmig ausgebildet ist und in Strömungsrichtung der zu trocknenden Luft dem Trockenmittelbehälter vorgeschaltet ist. Das Filterelement hat die Funktion eines Luftentölelements, wobei das stromauf des Trockenmittelbehälters angeordnete Filterelement radial durchströmt wird und die axialen Stirnseiten des Filterelements verschlossen sind. Die Durchströmungsrichtung erfolgt beispielsweise radial von innen nach außen, wobei grundsätzlich auch eine Durchströmung in Gegenrichtung, also radial von außen nach innen in Betracht kommt.

Bei dem erfindungsgemäßen Lufttrockner ist zumindest eine stirnseitige Endscheibe am Filterelement von einem umlaufenden Absatz des Trockenmittelbehälters gebildet. Das ringförmige Filterelement liegt hierbei mit einer Stirnseite axial an der Außenwand des Trockenmittelbehälters an, so dass auf eine als zusätzliches, separates Bauteil ausgeführte Endscheibe verzichtet werden kann. Entsprechend vereinfacht sich die Herstellung des Filterelementes, das zumindest an der dem Trockenmittelbehälter zugewandten Stirnseite keine zusätzliche Endscheibe benötigt. Hierbei ist insbesondere vorgesehen, dass die Stirnseite des Filterelementes druck- und strömungsdicht an den Trockenmittelbehälter anliegt, um Fehlluftströme über die Stirnseite zu verhindern. Zweckmäßigerweise ist das Filterelement mit der Außenwand des Trockenmittelbehälters durch Kleben oder Schweißen verbunden, beispielsweise Reibschweißen oder Ultraschallschweißen.

Im Falle eines Verklebens der Stirnseite mit der Außenwand des Trockenmittelbehälters ist zweckmäßigerweise ein Klebemittel zumindest an diejenige Stirnseite des Filterelementes aufgebracht, die in Kontakt mit dem Trockenmittelbehälter liegt. Das Klebemittel bzw. die Klebemasse ist vorzugsweise an die Stirnseite des Filterelementes angespritzt und härtet im an den Trockenmittelbehälter anliegenden Zustand aus, wodurch eine feste Klebeverbindung, die zugleich strömungs- und druckdicht ist, realisiert wird.

Gemäß weiterer zweckmäßiger Ausführung ist der Absatz an der Außenseite des Trockenmittelbehälters gebildet, und bildet eine axiale Abstützfläche an der eine Stirnseite des Filterelementes anliegt. Das ringförmige Filterelement umgreift radial den Trockenmittelbehälter und liegt axial mit seiner Stirnseite an einem radial verbreiterten und umlaufenden Absatz des Trockenmittelbehälters an. Hierbei kann es zweckmäßig sein, an dem Absatz eine radial außen liegende und sich in Achsrichtung erstreckende Klemmwand am Trockenmittelbehälter vorzusehen, die gemeinsam mit dem Absatz eine Aufnahme für die Stirnseite des Filterelements bildet. Die radiale Mantelfläche, an der die Innenseite des ringförmigen Filterelementes anliegt, die axiale Stützfläche am Absatz sowie die radial außen liegende Klemmwand bilden gemeinsam eine U-Form zur Aufnahme des Filterelements, so dass das Filterelement auch radial durch den Absatz und die Klemmwand fixiert ist.

Gemäß einer weiteren zweckmäßigen Ausführung ist vorgesehen, dass eine Endscheibe an einer Stirnseite des Filterelements Träger einer Dichtlippe ist. Zweckmäßigerweise ist diese Endscheibe als ein separates Bauteil ausgeführt, das mit einer Stirnseite des Filterelements verbunden ist und zugleich die Dichtlippe trägt, so dass der Endscheibe insoweit eine doppelte Funktion zukommt. Die Endscheibe befindet sich an der dem Absatz am Trockenmittelbehälter gegenüberliegenden Stirnseite des Filterelements.

Die Dichtlippe ist zweckmäßigerweise an die Endscheibe angespritzt, wobei es für eine verbesserte Verbindung zwischen der Dichtlippe und der Endscheibe vorteilhaft ist, dass in die Endscheibe eine Ausnehmung eingebracht ist und die Dichtlippe sich durch die Ausnehmung hindurch erstreckt. Das Einbringen der Dichtlippe in die Ausnehmung in der Endscheibe erfolgt zweckmäßigerweise ebenfalls im Wege des Anspritzens. Die Dichtlippe ist in der Ausnehmung formschlüssig aufgenommen, so dass zumindest in Radialrichtung, gegebenenfalls auch in Achsrichtung ein fester Verbund zwischen Endscheibe und Dichtlippe gegeben und die Dichtlippe sicher an der Endscheibe gehalten ist. Die Dichtlippe besteht insbesondere aus einem Elastomer.

Es kann zweckmäßig sein, die als separates Bauteil ausgeführte Endscheibe über ein Klebemittel mit der Stirnseite des Filterelementes zu verbinden, wobei gegebenenfalls auch die Dichtlippe mit einem Dichtfuß bis in den Bereich des Klebemittels einragt.

Des Weiteren ist in einer vorteilhaften Ausführung vorgesehen, dass an die Endscheibe Stützfüße angespritzt sind, an denen ein Gehäusedeckel des Gehäuses abgestützt ist. Diese Ausführung kann vorteilhafterweise mit der Ausnehmung in der Endscheibe und die angespritzte Dichtlippe kombiniert werden, wobei grundsätzlich auch eine hiervon unabhängige Ausführung in Betracht kommt, bei der auf eine Ausnehmung in der Endscheibe zur Aufnahme einer Dichtlippe verzichtet wird. Die an die Endscheibe angespritzten Stützfüße stützen sich vorzugsweise an einem Gehäusedeckel des Gehäuses ab, mit welchem das insbesondere topfförmige Gehäuse zu verschließen ist.

### Kurze Beschreibung der Zeichnungen

Weitere Vorteile und zweckmäßige Ausführungen sind den weiteren Ansprüchen, der Figurenbeschreibung und den beispielhaften Zeichnungen zu entnehmen.

Es zeigen:
Fig. 1 einen Lufttrockner zur Verwendung in einer Druckluftanlage in einem Nutzfahrzeug, mit einem topfförmigen Gehäuse, in welchem ein Trockenmittelbehälter aufgenommen ist, um den ein ringförmiges Filterelement gelegt ist,
Fig. 2 der Lufttrockner im Bereich des Filterelements in vergrößerter Darstellung,
Fig. 3 das Filterelement mit einer stirnseitigen Endscheibe, die eine Ausnehmung mit eingespritzter Dichtlippe aufweist,
Fig. 4 die Endscheibe gemäß Detail IV aus Fig. 3 in Einzeldarstellung.
In den Figuren sind gleiche Bauteile mit gleichen Bezugszeichen versehen.

### Ausführungsform(en) der Erfindung

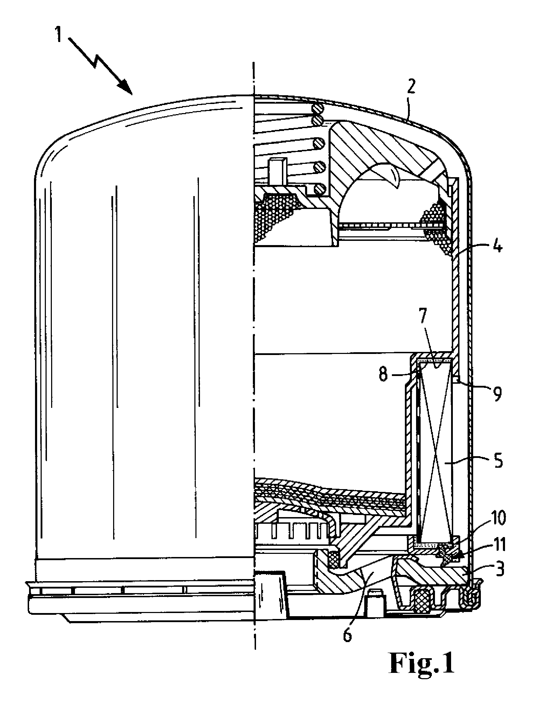

Der in Fig. 1 dargestellte Lufttrockner 1 weist ein zylindrisches bzw. topfförmiges Gehäuse 2 auf, das von unten über einen Gehäuse- bzw. Gewindedeckel 3 zu verschließen ist. Im Gehäuse 2 ist ein Trockenmittelbehälter 4 mit einem Trockenmittel aufgenommen, welches zur Trocknung hindurchgeführter Luft dient. Als Trockenmittel wird beispielsweise Silicagel verwendet.

Die Außenwand des Trockenmittelbehälters 4 ist radial von einem ringförmigen Filterelement 5 umgriffen, das ein Luftentölelement zur Reinigung der hindurchgeführten Luft dient. Das Filterelement 5 liegt stromauf des Trockenmittelbehälters 4. Die in den Lufttrockner 1 eingeführte und zu entfeuchtende Luft wird über eine Einströmöffnung 6 im Gehäusedeckel 3 eingeleitet und durchströmt zunächst das Filterelement 5 radial von innen nach außen. Anschließend wird die gereinigte, jedoch noch feuchte Luft über die Oberseite in den Trockenmittelbehälter 4 geleitet und durchströmt diesen axial von oben nach unten. Die entfeuchtete Luft wird anschließend axial über die Unterseite, also den Gehäusedeckel 3 aus dem Lufttrockner 1 abgeleitet.

Das Filterelement 5 erstreckt sich axial etwa über die halbe axiale Länge des Trockenmittelbehälters 4. Etwa in der Mitte des Trockenmittelbehälters 4 weist dieser einen Absatz 7 auf, der dadurch gebildet ist, dass der Trockenmittelbehälter 4 im oberen Abschnitt einen größeren Durchmesser aufweist als im unteren Abschnitt, in welchem sich das Filterelement 5 befindet. Der Absatz 7 ist durch den sich radial verbreiterten Abschnitt des Trockenmittelbehälters 4 gebildet, wobei die axiale Stirnfläche an dem Absatz 7, welche dem Gehäusedeckel 3 zugewandt ist, eine Abstützfläche für die Stirnseite des Filterelementes 5 bildet.

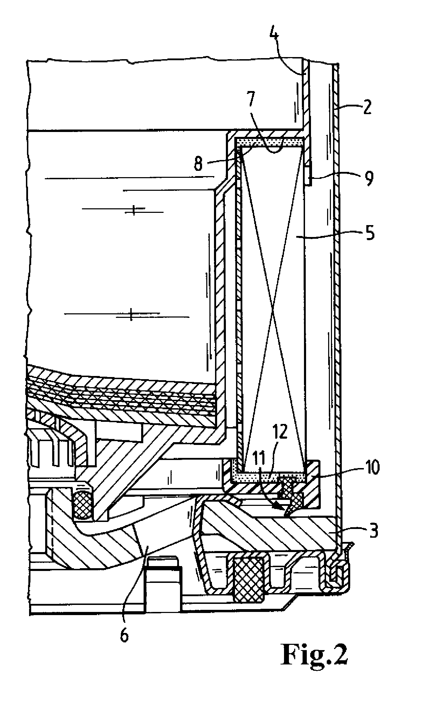

Wie Fig. 1 in Verbindung mit der vergrößerten Darstellung gemäß Fig. 2 zu entnehmen, ist die am Absatz 7 des Trockenmittelbehälters 4 anliegende Stirnseite des Filterelementes 5 mithilfe einer Klebemasse bzw. eines Klebemittels 8 mit dem Absatz 7 verklebt. Alternativ zu einem Verkleben kommt beispielsweise auch ein Verschweißen, beispielsweise im Wege des Reibschweißens oder Ultraschallschweißens in Betracht.

Einteilig mit der Wandung des Trockenmittelbehälters 4 ist eine radial außen liegende Klemmwand 9 in Höhe des Absatzes 7 ausgebildet, wobei die Klemmwand 9 eine axiale Verlängerung der Außenwand im Bereich des radial erweiterten Abschnittes des Trockenmittelbehälters 4 bildet. Die Klemmwand 9 überragt axial den Absatz 7, wodurch eine U-förmige Aufnahme für die Stirnseite des Filterelementes 5 gegeben ist und die U-förmige Aufnahme von der Innenseite der Klemmwand 9, dem Absatz 7 sowie der äußeren Mantelfläche des Trockenmittelbehälters im Bereich des radial reduzierten Abschnittes gebildet ist.

Wie den Fig. 1 bis 3 zu entnehmen, ist die untere Stirnseite des Filterelementes 5, welche dem Absatz 7 gegenüberliegt, von einer als separates Bauteil ausgeführten Endscheibe 10 eingefasst. In die Endscheibe 10 ist eine Ausnehmung eingebracht, in die eine Dichtlippe 11 eingespritzt ist. Der Hauptteil der Dichtlippe 11, welche vorzugsweise aus einem Elastomer besteht, ragt auf der dem Filterelement 5 abgewandten Seite über die Endscheibe 10 über, wobei die freie Stirnseite der Dichtlippe 11 auf Kontakt zum Gehäusedeckel 3 liegt. Auf diese Weise ist ein strömungsdichter Kontakt zwischen dem Gehäusedeckel 3 und der umlaufenden Dichtlippe 11 gebildet.

Die Stirnseite des Filterelementes 5, welche von der Endscheibe 10 eingefasst ist, ist mit einem Klebemittel 12 versehen, über das die Stirnseite mit der Endscheibe 10 verklebt ist. Ein durch die Ausnehmung in der Endscheibe 10 hindurchragender Fuß der Dichtlippe 11 ragt zweckmäßigerweise bis in das Klebemittel 12 ein.

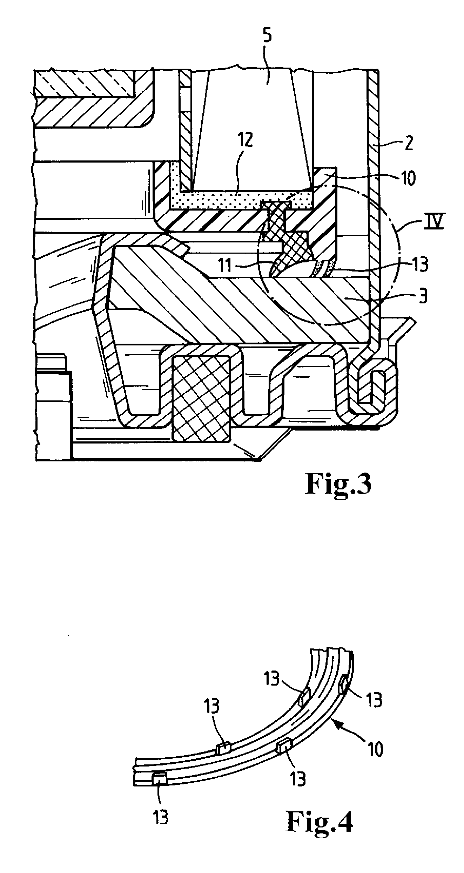

Wie Fig. 3 in Verbindung mit Fig. 4 zu entnehmen, stützt sich die Endscheibe 10 über angespritzte Stützfüße 13 an dem Gehäusedeckel 3 ab. Die Stützfüße 13 befinden sich insbesondere im radial außen liegenden Bereich der Endscheibe 10. Die Dichtlippe 11 ist gegenüber den Stützfüßen 13 radial nach innen versetzt.

## Patentansprüche

1. Lufttrockner, insbesondere für eine Druckluftanlage in einem Nutzfahrzeug, mit einem Gehäuse (2), in welchem ein ringförmiges Filterelement (5) und ein Trockenmittelbehälter (4) aufgenommen sind, wobei die Stirnseiten des Filterelements (5) von Endscheiben verschlossen sind, wobei zumindest eine stirnseitige Endscheibe von einem umlaufenden Absatz (7) des Trockenmittelbehälters (4) gebildet ist, **dadurch gekennzeichnet, dass** die Stirnseite des Filterelements (5) mit dem Absatz verklebt oder verschweißt ist.

2. Lufttrockner nach Anspruch 1, **dadurch gekennzeichnet, dass** das Filterelement (5) druck- und strömungsdicht an dem Trockenmittelbehälter (4) gehalten ist, insbesondere durch Kleben oder Schweißen.

3. Lufttrockner nach Anspruch 1 oder 2, **dadurch gekennzeichnet, dass** ein Klebemittel (8) an mindestens eine Stirnseite des Filterelements (5) angespritzt ist.

4. Lufttrockner nach einem der Ansprüche 1 bis 3, **dadurch gekennzeichnet, dass** an dem Trockenmittelbehälter (4) der umlaufender Absatz (7) gebildet ist, an dem eine Stirnseite des Filterelements (5) anliegt.

5. Lufttrockner nach Anspruch 4, **dadurch gekennzeichnet, dass** am Absatz (7) eine radial außen liegende Klemmwand (9) am Trockenmittelbehälter (4) gebildet ist, die gemeinsam mit dem Absatz (7) eine Aufnahme für eine Stirnseite des Filterelements (5) bildet.

6. Lufttrockner nach einem der Ansprüche 1 bis 5, **dadurch gekennzeichnet, dass** eine Endscheibe (10) an einer Stirnseite des Filterelements (5) Träger einer Dichtlippe (11) ist.

7. Lufttrockner nach Anspruch 6, **dadurch gekennzeichnet, dass** die Dichtlippe (11) an die Endscheibe (10) angespritzt ist.

8. Lufttrockner nach Anspruch 6 oder 7, **dadurch gekennzeichnet, dass** in die Endscheibe (10) eine Ausnehmung eingebracht ist und die Dichtlippe (11) sich durch die Ausnehmung hindurch erstreckt.

9. Lufttrockner nach einem der Ansprüche 1 bis 8, **dadurch gekennzeichnet, dass** an einer Endscheibe (10) Stützfüße (13) angeordnet sind, an denen ein Gehäusedeckel (3) des Gehäuses (2) abgestützt ist.

10. Lufttrockner nach einem der Ansprüche 6 bis 9, **dadurch gekennzeichnet, dass** eine Endscheibe (10) als separates Bauteil ausgeführt und mit einer Stirnseite des Filterelements (5) verbunden ist.

## Claims

1. Air drier, in particular for a compressed air system in a commercial vehicle, with a housing (2) in which an annular filter element (5) and a desiccant container (4) are accommodated, the front faces of the filter element (5) being closed by end disks, at least one frontal end disk being formed by a circumferential shoulder (7) of the desiccant container (4), **characterized in that** the front face of the filter element (5) is glued or welded with the shoulder.

2. Air drier according to claim 1, **characterized in that** the filter element (5) is held at the desiccant container (4) in a pressure- and flow-tight manner, in particular by gluing or welding.

3. Air drier according to claim 1 or 2, **characterized in that** an adhesive (8) is injection molded to at least one front face of the filter element (5).

4. Air drier according to one of the claims 1 to 3, **characterized in that** the circumferential shoulder (7), which abuts a front face of the filter element (5), is formed on the desiccant container (4).

5. Air drier according to claim 4, **characterized in that** at the shoulder (7) is formed a radially outside lying clamping wall (9) on the desiccant container (4), which forms together with the shoulder (7) a receptacle for a front face of the filter element (5).

6. Air drier according to one of the claims 1 to 5, **characterized in that** an end disk (10) is the holding fixture of a sealing lip (11) on a front face of the filter element (5).

7. Air drier according to claim 6, **characterized in that** the sealing lip (11) is injection molded to the end disk (10).

8. Air drier according to claim 6 or 7, **characterized in that** a recess is made in the end disk (10) and that the sealing lip (11) extends through the recess.

9. Air drier according to one of the claims 1 to 8, **characterized in that** on an end disk (10) support feet (13) are disposed which support a housing cover (3) of the housing (2).

10. Air drier according to one of the claims 6 to 9, **characterized in that** an end disk (10) is designed as separate component and connected with a front face of the filter element (5).

## Revendications

1. Dessiccateur d'air, notamment pour un dispositif à air comprimé d'un véhicule utilitaire, avec un boîtier (2) contenant un élément filtrant (5) annulaire et un réservoir de déshydratant (4), les faces frontales de l'élément filtrant (5) étant fermées par des disques d'extrémité, au moins un disque d'extrémité frontal étant formé par un épaulement circulaire (7) du réservoir de déshydratant (4), **caractérisé en ce que** la face frontale de l'élément filtrant (5) est collée ou soudée à l'épaulement.

2. Dessiccateur d'air selon la revendication 1, **caractérisé en ce que** l'élément filtrant (5) est maintenu, notamment par collage ou soudage, contre le réservoir de déshydratant (4) de manière étanche à la pression et au flux.

3. Dessiccateur d'air selon la revendication 1 ou 2, **caractérisé en ce qu**'une colle (8) est injectée sur au moins une face frontale de l'élément filtrant (5).

4. Dessiccateur d'air selon l'une des revendications 1 à 3, **caractérisé en ce que** l'épaulement circonférentiel (7), contre lequel est appliquée une face frontale de l'élément filtrant (5), est formé sur le réservoir de déshydratant (4).

5. Dessiccateur d'air selon la revendication 4, **caractérisé en ce que,** sur l'épaulement (7), une paroi de serrage (9) radiale extérieure est formée sur le réservoir de déshydratant (4), laquelle forme, avec l'épaulement (7), un logement pour une face frontale de l'élément filtrant (5).

6. Dessiccateur d'air selon l'une des revendications 1 à 5, **caractérisé en ce qu**'un disque d'extrémité (10), sur une face frontale de l'élément filtrant (5), fait office de support d'une lèvre d'étanchéité (11).

7. Dessiccateur d'air selon la revendication 6, **caractérisé en ce que** la lèvre d'étanchéité (11) est injectée sur le disque d'extrémité (10).

8. Dessiccateur d'air selon la revendication 6 ou 7, **caractérisé en ce qu**'un évidement est ménagé dans le disque d'extrémité (10) et que la lèvre d'étanchéité (11) s'étend à travers l'évidement.

9. Dessiccateur d'air selon l'une des revendications 1 à 8, **caractérisé en ce que** des pieds d'appui (13) sur lesquels repose un couvercle de boîtier (3) du boîtier (2) sont disposés sur un disque d'extrémité (10).

10. Dessiccateur d'air selon l'une des revendications 6 à 9, **caractérisé en ce qu**'un disque d'extrémité (10) est exécuté en tant qu'élément séparé et est relié à une face frontale de l'élément filtrant (5).
